# EUROPÄISCHE PATENTSCHRIFT

(11) **EP 1 679 214 B1**
(45) Veröffentlichungstag und Bekanntmachung des Hinweises auf die Patenterteilung: **03.01.2007**
(21) Anmeldenummer: 05024959.8
(22) Anmeldetag: 15.11.2005
(51) Int. Cl.: B60J 7/20

(54) **Fahrzeug mit offenem Aufbau**
Motor vehicle with an open bodywork
Voiture à carrosserie ouverte

(30) Priorität: 07.01.2005 DE 102005000946
(43) Veröffentlichungstag der Anmeldung: 12.07.2006
(73) Patentinhaber: CTS Fahrzeug-Dachsysteme GmbH, 74321 Bietigheim-Bissingen (DE)
(72) Erfinder: Hesse, Jan, 74321 Bietigheim-Bissingen (DE)
(74) Vertreter: Wittner, Walter

(56) Entgegenhaltungen:
- DE-A1- 10 309 366
- DE-A1- 19 946 454
- DE-B3- 10 340 017
- DE-C1- 4 445 944

## Beschreibung

Die Erfindung betrifft ein Fahrzeug mit offenem Aufbau und einer mehrteiligen Dachabdeckung gemäß dem Oberbegriff des Anspruches 1.

Solche Fahrzeuge sind aus der DE 197 56 981 C2 und DE 199 46 454 A1 bekannt. Ihre Dachabdeckung ist zwischen einer den Fahrzeuginnenraum überdeckenden Schließstellung und einer Öffnungsstellung verstellbar und in der Öffnungsstellung in einer heckseitigen Verdeckaufnahme abzulegen, die über einen Heckdeckel zu verschließen ist.

Der Heckdeckel ist ausgehend von seiner die Verdeckaufnahme verschließenden Stellung, bezogen auf die Fahrtrichtung, nach entgegengesetzten Richtungen aufschwenkbar, einmal nach vorne oben in eine Beladestellung für den Kofferraum, und zum anderen nach hinten oben in eine den Zugang zur Verdeckaufnahme freigebende Dachablagestellung.

Zur Realisierung der entgegengesetzten Öffnungsstellungen sind längsseitlich zum Heckdeckel Anbindungen zwischen Karosserie und Heckdeckel vorgesehen, die jeweils durch zwei aufeinander folgende und gegeneinander abgestützte Lenkerkinematiken gebildet sind, und zwar eine untere, karosserieseitig angelenkte und eine obere, heckdeckelseitig angelenkte Lenkerkinematik. Zwischen diesen Lenkerkinematiken liegt eine Basis und durch Ausfahren jeweils einer der Lenkerkinematiken wird der Heckdeckel verschwenkt, über die untere Lenkerkinematik in seine Dachablagestellung, über die obere Lenkerkinematik in seine Beladestellung.

Von den Lenkerkinematiken ist die untere als Viergelenk ausgebildet und in ihrer eingefahrenen, der Schließlage des Heckdeckels entsprechenden Stellung gegen die Karosserie verriegelt. Ausgefahren in ihre der Dachablagestellung des Heckdeckels entsprechende Schwenklage wird die untere Lenkerkinematik durch Beaufschlagung eines ihrer Lenker über einen Betätigungszylinder.

Die obere Lenkerkinematik ist durch einen Siebengelenk gebildet und in ihrer eingefahrenen Stellung durch eine Verriegelung gegen die zwischen den Lenkerkinematiken liegende Basis blockiert.

Die Lenker des Viergelenks erstrecken sich - bei geschlossenem Heckdeckel - von der im Bereich des vorderen Endes des Heckdeckels liegenden Basis im Wesentlichen in Längsrichtung und bestimmen für den Heckdeckel beim Aufschwenken in dessen Dachablagestellung - durch Ausfahren des unteren Viergelenks - die Lage der Schwenkachse, wodurch sich ein größerer konstruktiver Freiraum für die Heckgestaltung des Fahrzeuges ergeben soll. Verbunden ist damit allerdings ein großer seitlicher Raumbedarf.

Damit sind bezüglich des Raumbedarfs vergleichbare Verhältnisse zu Lösungen gemäß der DE 44 45 944 C1 gegeben, bei der die obere Lenkerkinematik als Siebengelenk ausgestaltet ist und über eine Basis auf den Schenkeln eines U-förmigen Rahmens abgestützt ist, der heckseitig im Bereich seines quer laufenden Steges gelagert und anstelle einer unteren Lenkerkinematik vorgesehen ist.

Weiter ist aus der DE 100 51 616 A1 eine karosserieseitige Anbindung für einen in eine Beladestellung nach vorne oben und in eine Dachablagestellung nach hinten oben verschwenkbaren Heckdeckel bekannt, die durch zwei über eine Basis aufeinander abgestützte Lenkerkinematiken gebildet ist, von denen die untere als über einen Drehantrieb angetriebenes Neungelenk und die obere als Viergelenk ausgebildet ist, das auf seine Ausfahrlage über eine Gasdruckfeder beaufschlagt ist. Auch diese Lösung zielt für die Dachablagestellung auf eine nach hinten verlagerte, imaginäre Schwenkachse für den Heckdeckel ab, um den gestalterischen Freiraum im Heckbereich zu erweitern, wobei über die Neungelenkanordnung eine parallelogrammartige Abstützung der Basis gegenüber einem karosserieseitig angelenkten Kreuzungslenker als angetriebenem Hauptlenker geschaffen ist, der über ein Lenkergestänge zu verstellen ist, das einen zum Hauptlenker kreuzenden Lenker sowie von diesem ausgehende Verbindungslenker zur Basis und zur Karosserie aufweist. Dadurch ist in Verbindung mit der Stellbewegung des Hauptlenkers über das Lenkergestänge eine Verlagerung der Basis im Wesentlichen in Längsrichtung des den Hauptlenker bildenden Kreuzungslenker möglich, sodass ungeachtet großer Stellwege die Lenkerkinematik für die Verstellung des Heckdeckels in die Beladestellung kompakt gestaltet werden kann.

Die Erfindung zielt auf eine karosserieseitige Anbindung für den Heckdeckel ab, bei der der für die Lenkerkinematiken längsseitlich zur Karosserie vorzuhaltende Freiraum eng bemessen werden kann und die Lenkerkinematiken einen Aufbau aufweisen, der für den Heckdeckel, höhenversetzt, zu im Betrag des Schwenkwinkels weitgehend einander entsprechenden, in der Schwenkrichtung aber entgegengesetzten Schwenkbewegungen führt, um den Heckdeckel in seiner Beladestellung gegenüber seiner den Kofferraum abdeckenden Schließstellung nicht nur nach vorne oben zu schwenken, sondern zusätzlich gegenüber seiner Schließstellung auch nach oben in eine stabile Beladungsstellung auszuheben, die sowohl von hinten wie auch seitlich hinten einen guten Zugang zum Kofferraum ermöglicht.

Gemäß der Erfindung wird dies mit den Merkmalen des Anspruches 1 erreicht, wobei für die obere und die untere Lenkerkinematik jeweils eine Siebengelenkanordnung Verwendung findet und die beiden Siebengelenke in Seitenansicht zueinander seitenverkehrt angeordnet sind, wodurch sich bei gleichem Grundaufbau der Siebengelenke in einfacher Weise in der jeweils ausgefahrenen Stellung eine Abstützung des Heckdeckels erreichen lässt, wie sie im Hinblick auf die angestrebten gegensinnig aufgeschwenkten Lagen des Heckdeckels anzustreben ist. Jedes der Siebengelenke stellt sich in der ausgefahrenen Lage als eine Aneinanderreihung zweier gestreckter Rhomben dar, die in einem ihrer Eckpunkte zusammenfallen und einen gemeinsamen Anlenkpunkt aufweisen.

Die zwischen den Siebengelenken liegende Basis erstreckt sich mit Abstand unterhalb des Heckdeckels in dessen Schließlage, und ausgehend von der Basis fährt das obere Siebengelenk scherenartig in Hochrichtung aus, wobei sich für den Heckdeckel die nach hinten oben offene Beladestellung ergibt, in die der Heckdeckel aus seiner Schließstellung nach oben ausgehoben und nach vorne oben geschwenkt ist, wobei die ausgefahrene Siebengelenkanordnung im vorderen Endbereich des Kofferraums und des Heckdeckels angeordnet ist, sodass der Zugang zum Kofferraum sowohl seitlich wie auch von hinten behinderungsfrei möglich ist.

Für die Stabilität der durch die Siebengelenke gebildeten Verbindung zwischen Heckdeckel und Karosserie, insbesondere bei ausgefahrenem oberen Siebengelenk und in die Beladestellung nach oben angehobenem und ausgeschwenktem Heckdeckel, erweist es sich als zweckmäßig, wenn im Bereich der Basis eine Verrastung zwischen der durch die Siebengelenke gebildeten Gelenkkette und der Karosserie bei eingefahrenem unteren Siebengelenk gegeben ist, sodass die Gelenkkette nahe dem oberen Randbereich des Kofferraumes zur Karosserie insbesondere über die Basis lagefest abgestützt ist, wodurch auch die gewünschte Quersteifigkeit trotz leichten Aufbaues des oberen Siebengelenks bei in die Beladestellung angehobenem Heckdeckel erreicht werden kann.

Rückseitig ist der Heckdeckel bevorzugt längsmittig des Fahrzeuges über einen Heckdeckelverschluss gegen die Karosserie festzulegen, der einen Schlossteil aufweist, welcher zur Karosserie lageveränderlich ist und in seiner der Schließlage des Heckdeckels entsprechenden Lage auch lagefest zu fixieren ist.

In der Schließlage des Heckdeckels ist der Schlossteil geschlossen, und bei geschlossenem Schlossteil ist der Heckdeckel über die untere Siebengelenkanordnung auch in seine Dachablagestellung aufschwenkbar. Die Schwenkbewegung des Heckdeckels in seine Dachablagestellung ist mit einer Lageveränderlichkeit des Schlossteiles verbunden, das hierzu über eine entsprechende Lenkeranordnung, bevorzugt eine Parallelogrammlenkeranordnung, der Schwenkbewegung des Heckdeckels folgend geführt ist. Bei Überführung des Heckdeckels in seine Schließlage wird der Schlossteil über die zugeordnete Lenkeranordnung, die insbesondere durch ein Lenkerparallelogramm gebildet ist, entsprechend verlagert und gelangt in den Bereich einer Spannvorrichtung, über die der Schlossteil mit dem Heckdeckel gegen die Karosserie und damit in eine der Schließlage des Heckdeckels entsprechende Verriegelungslage gezogen wird.

Ein derartiger Heckdeckelverschluss trägt bei in seine Dachablagestellung verschwenktem Heckdeckel zur Stabilisierung des Heckdeckels bei und macht es ferner möglich, den über die untere Siebengelenkanordnung in seine Schließlage verschwenkten Heckdeckel zusätzlich zu verspannen, wobei die Spanneinrichtung in analoger Weise auch genutzt werden kann, um den aus seiner Beladestellung in die Schließstellung verschwenkten Heckdeckel im Sinne einer Zuziehhilfe zu beaufschlagen und fremdkraftunterstützt auch heckseitig zu verriegeln.

Weitere Einzelheiten und Merkmale der Erfindung ergeben sich aus den Ansprüchen. Ferner wird die Erfindung nachstehend anhand eines Ausführungsbeispieles näher erläutert. Es zeigen:
- Fig. 1: schematisiert und in Seitenansicht den Heckbereich eines Fahrzeuges mit offenem Aufbau und einem Heckdeckel, der über eine verstellbare Anbindung zur Karosserie in seine nach hinten oben aufgestellte, den Zugang zum Kofferraum als Ablageraum für das Dach freigebende Dachablagestellung aufgeschwenkt ist,
- Fig. 2: eine der Fig. 1 entsprechende schematisierte Darstellung, bei der der Heckdeckel über seine Anbindung zur Karosserie in eine nach vorne oben aufgeschwenkte Beladestellung verstellt ist,
- Fig. 3: eine Ausschnittsvergrößerung III in Fig. 2, in der die Dämpfungseinrichtung, gegebenenfalls mit Anschlagfunktion, vergrößert dargestellt ist, die im sich beim Ausfahren der Lenkeranordnung schließenden Scherenwinkel zwischen zwei Lenkern liegt, und
- Fig. 4 und 5: weitere Darstellungen der Dämpfungseinrichtung, wobei in Fig. 4 eine Betriebsstellung und in Fig. 5 eine Außerbetriebsstellung - Schließstellung des Heckdeckels - der Dämpfungseinrichtung gezeigt ist.

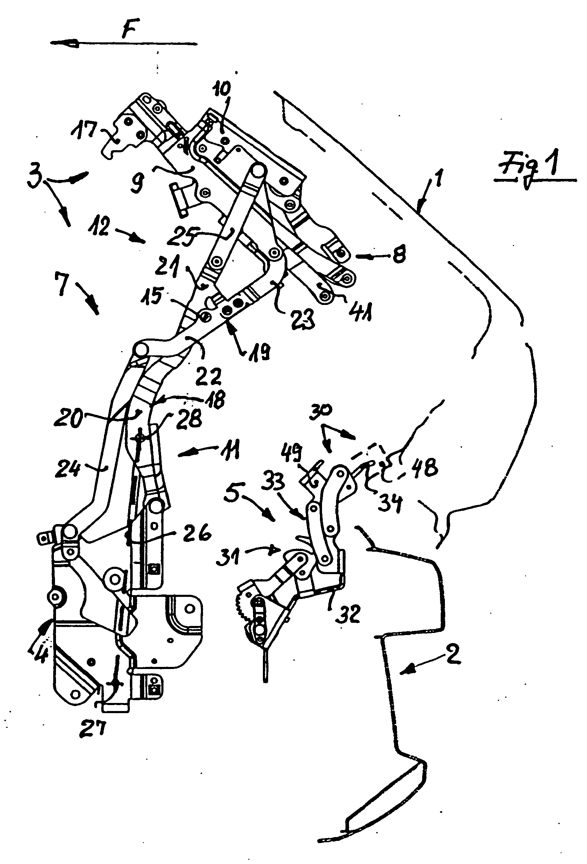

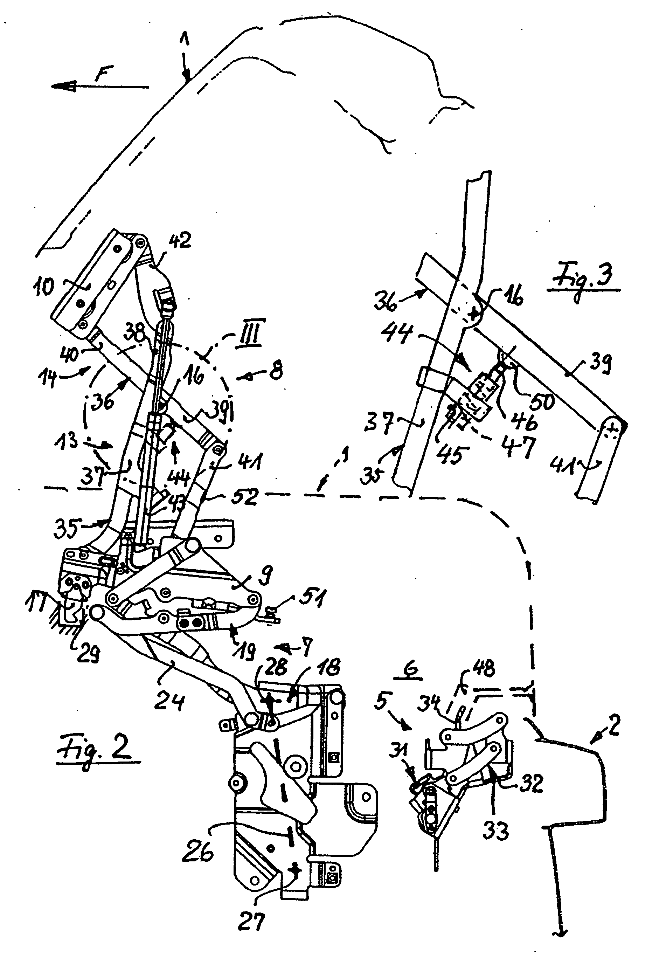

Fig. 1 und 2 zeigen für den Heckdeckel 1 eines Cabriolet-Fahrzeuges, von dessen Karosserie nur der untere Heckbereich 2 angedeutet ist, die Anbindung des Heckdeckels 1 zur Karosserie. Die Anbindung erfolgt im bezogen auf die Fahrtrichtung F vorderen Bereich des Heckdeckels 1 über Abstützungen 3, von denen entsprechend dem üblichen, zur Längsmittelebene des Fahrzeuges symmetrischen Aufbau je eine benachbart zu einer Längsseite des Heckdeckels 1 vorgesehen ist. Ferner umfasst die Anbindung einen Heckdeckelverschluss 5, der längsmittig zum Fahrzeug vorgesehen ist.

Über die Anbindung ist der Heckdeckel 1, dessen den Kofferraum 6 überdeckende Schließstellung strichliert nur schematisch angedeutet ist, entgegen der Fahrtrichtung F nach hinten oben in die "Dachablagestellung" (Fig. 1) und in Fahrtrichtung F nach vorne oben in die "Beladestellung" (Fig. 2) aufschwenkbar. Beim Verschwenken des Heckdeckels 1 in die Dachablagesstellung ist der Heckdeckel 1 über den Heckdeckelverschluss 5 mit dem unteren Heckbereich 2 verbunden, beim Verschwenken in die Beladestellung ist die Verbindung des Heckdeckels 1 über den Heckdeckelverschluss 5 zum unteren Heckbereich 2 freigegeben.

Jede der Abstützungen 3 umfasst zwei als Siebengelenke ausgebildete Lenkerkinematiken 7, 8, die über eine gemeinsame Basis 9 gegeneinander abgestützt verbunden sind und von denen die untere Lenkerkinematik 7 zwischen einer karrosseriefesten Konsole 4 und der Basis 9 liegt und die obere Lenkerkinematik 8 eine Befestigungsplatte 10 für den Heckdeckel 1 mit der Basis 9 verbindet. Beide Lenkerkinematiken 7, 8 sind unabhängig voneinander ausfahrbar, und es ist bei gegen die Basis 9 zusammengefahrener, oberer Lenkerkinematik 8 durch Ausfahren der unteren Lenkerkinematik 7 der mit der Befestigungsplatte 10 verbundene Heckdeckel 1 gemäß Fig. 1 in die Dachablagestellung aufgeschwenkt. In der Beladestellung gemäß Fig. 2 ist die untere Lenkerkinematik 7 in ihre zur Konsole 4 benachbarte Stellung zusammengefahren und die obere Lenkerkinematik 8 ausgefahren, sodass der mit der Befestigungsplatte 10 verbundene Heckdeckel 1 angehoben und nach vorne oben ausgeschwenkt ist. Beide Lenkerkinematiken 7, 8 sind in allen ihren Gelenkpunkten nicht lösbar, somit auch an der Basis 9, dem Heckdeckel 1 und der Konsole 4 nicht lösbar angebunden. Die Verstellung der Lenkerkinematiken 7, 8 erfolgt damit ausschließlich durch Lageänderung ihrer Lenker. Für die Lenkerkinematiken 7, 8 ergeben sich dabei im jeweils ausgefahrenen Zustand - bezogen auf die Fahrtrichtung F - gegensinnige Ausrichtungen, für die untere Lenkerkinematik 7 mit geringer Neigung zur Lotrechten nach hinten oben, für die obere Lenkerkinematik 8 nach vorne oben.

Jede der beiden Lenkerkinematiken 7 bzw. 8 ist durch zwei Viergelenke etwa in der Form von Lenkerparallelogrammen 11, 12 bzw. 13, 14 gebildet, die bei grundsätzlich gleichem Aufbau jeweils in einem gemeinsamen Gelenkpunkt 15 bzw. 16 verbunden sind. Bei der unteren Lenkerkinematik 7 sind im gemeinsamen Gelenkpunkt 15 Kreuzungslenker 18, 19 verbunden, von denen, bezogen auf den gemeinsamen Gelenkpunkt 15, der Kreuzungslenker 18 Lenkerarme 20 und 21 und der Kreuzungslenker 19 Lenkerarme 22 und 23 aufweist. Der Lenkerarm 20 des Kreuzungslenkers 18 ist an der Konsole 4 angelenkt, der Lenkerarm 23 des Kreuzungslenkers 19 an der Basis 9. Der gegenüberliegende Lenkerarm 22 des Kreuzungslenkers 19 ist über einen Lenker 24 an der Konsole 4 angelenkt. Die Verbindung des Lenkerarmes 21 des Kreuzungslenkers 18 zur Basis 9 erfolgt über einen Lenker 25.

In der ausgefahrenen Stellung der unteren Lenkerkinematik 7 erstrecken sich deren Lenkerparallelogramme 11, 12 im Wesentlichen gleichgerichtet als gestreckte rhombische Vierecke von der Konsole 4 gegen die Basis 9 schräg nach hinten oben und sind in ihren einander zugewandten Spitzen in dem gemeinsamen Gelenkpunkt 15 verbunden. Somit bilden die Kreuzungslenker 18, 19 eine Schere mit dem gemeinsamen Gelenkpunkt 15 als Scherenachse.

Verstellbar ist die untere Lenkerkinematik 7 über ein Linearstellglied 26, das insbesondere durch einen Hydraulikzylinder gebildet ist, das sich zwischen einem Anlenkpunkt 27 an der Konsole 4 und einem Anlenkpunkt 28 am Lenkerarm 20 erstreckt und das bezogen auf die ausgefahrene Lage der Lenkerkinematik 7 im Wesentlichen die gleiche Erstreckungsrichtung wie der Lenkerarm 20 und der Lenker 24 des Lenkerparallelogrammes 11 aufweist und zwischen diesen liegt.

Die obere.Lenkerkinematik 8 entspricht, in ihrem prinzipiellen Aufbau, der unteren Lenkerkinematik 7 und weist zwei Kreuzungslenker 35, 36 auf, von denen der Kreuzungslenker 35 Lenkerarme 37, 38 und der Kreuzungslenker 36 Lenkerarme 39 und 40 umfasst. Den Lenkerarmen 37, 40 entsprechen als korrespondierende Seiten der Lenkerparallelogramme 13 und 14 Lenker 41 und 42, von denen der Lenker 41 in der Verbindung des Lenkerarmes 39 zur Basis 9 und der Lenker 42 in der Verbindung des Lenkerarmes 38 zur Befestigungsplatte 10 vorgesehen ist. Zwischen der Basis 9 und dem Lenkerarm 42 erstreckt sich ein Federspannglied 43, über das die obere Lenkerkinematik 8 in Richtung auf ihre ausgefahrene Lage belastet ist.

In der Dachablagestellung ist die untere Lenkerkinematik 7 ausgefahren, bei zusammengefahrener oberer Lenkerkinematik 8, und in der Beladestellung ist die untere Lenkerkinematik 7 zusammengefahren, bei ausgefahrener oberer Lenkerkinematik 8. Ferner ist der Heckdeckel 1 in der Dachablagestellung heckseitig zur Karosserie über den Heckdeckelverschluss 5 verschwenkbar gehalten, während in der Beladestellung die Verbindung des Heckdeckels 1 zum unteren Heckbereich 2 über den Heckdeckelverschluss 5 freigegeben ist.

Bei zusammengefahrener unterer Lenkerkinematik 7, also in der Beladestellung, ist die Basis 9 über ein Rastglied 17 in einer karosserieseitigen Rastaufnahme 29 festgelegt. Eine entsprechende Festlegung der Basis 9 zur Karosserie ist auch gegeben, wenn beide Lenkerkinematiken 7, 8 zusammengefahren sind und der Heckdeckel 1 seine den Kofferraum 6 überdeckende geschlossene, strichliert dargestellte Lage einnimmt, in der der Heckdeckel 1 ferner über den Heckdeckelverschluss 5 zur Karosserie festgelegt ist.

Zum Heckdeckelverschluss 5 zeigen die Fig. 1 und 2 eine stark vereinfachte Darstellung. Der Heckdeckelverschluss 5 umfasst einen Schlossteil 30 und einen Spannteil 31. Der Schlossteil 30 weist eine deckelseitige, nur angedeutete Schließaufnahme 48 und ein karosserieseitiges Gegenstück auf, das durch eine Stecklasche 34 gebildet ist. Die Stecklasche 34 ist einem Tragteil 49 zugeordnet, das über ein karosserieseitig angelenktes Lenkerparallelogramm 33 zum unteren Heckbereich 2 in Fahrzeuglängsrichtung höhenverschwenkbar gehalten ist. Die Verbindung zur Karosserie erfolgt über eine Tragplatte 32, auf der die karosserieseitigen Teile des Heckdeckelverschlusses 5 zusammengefasst angeordnet sind.

Der Spannteil 31 tritt in Funktion, wenn der Heckdeckel 1 aus seiner Dachablagestellung in seine den Kofferraum 6 überdeckende Schließstellung überführt wird. In der Dachablagestellung ist für den Heckdeckel 1 über den Heckdeckelverschluss 5 eine Schwenkverbindung zum unteren Heckbereich 2 gegeben, über die der Heckdeckel 1 angehoben und nach hinten ausgeschwenkt wird.

Bei der Überführung des Heckdeckels 1 aus der Dachablagestellung in die Schließstellung wird die untere Heckdeckelkinematik 7 zusammengefahren, bei gleichzeitiger Verlagerung des Schlossteiles 30 über das Lenkerparallelogramm 33 in eine der Verriegelungsstellung des Schlossteiles 30 gegenüber dem unteren Heckbereich 2 vorgelagerte Stellung. Ausgehend von einer derartigen Zwischenstellung, in der die untere Lenkerkinematik 7 ihre zusammengefahrene Stellung erreicht hat, wird durch weitere Beaufschlagung über das Linearstellglied 26 das der Basis zugeordnete Rastglied 17 in die Rastaufnahme 29 gezogen und über den Spannteil 31 der Schlossteil 30 in Richtung einer Verspannung des Heckdeckels 1 in Richtung auf seine Schließlage beaufschlagt. Dadurch wird eine lagefeste Fixierung des Heckdeckels 1 zur Karosserie bei fester Verspannung gegen die zwischen Karosserie und Heckdeckel 1 liegenden Dichtungen erreicht.

Im Falle der Überführung aus der Beladestellung in die Schließstellung gemäß Fig. 2 befindet sich der über das Lenkerparallelogramm 33 geführte Tragteil 49 für die Stecklasche 34 bereits in einer der Verspannung über das Spannteil 31 entsprechenden Lage, sodass beim Zusammenfahren der oberen Lenkerkinematik 8 die Stecklasche 34 und die Schließaufnahme 48 des Schlossteiles 30 in Eingriff kommen und die Verriegelung des Heckdeckels 1 über den Heckdeckelverschluss 5 erreicht ist.

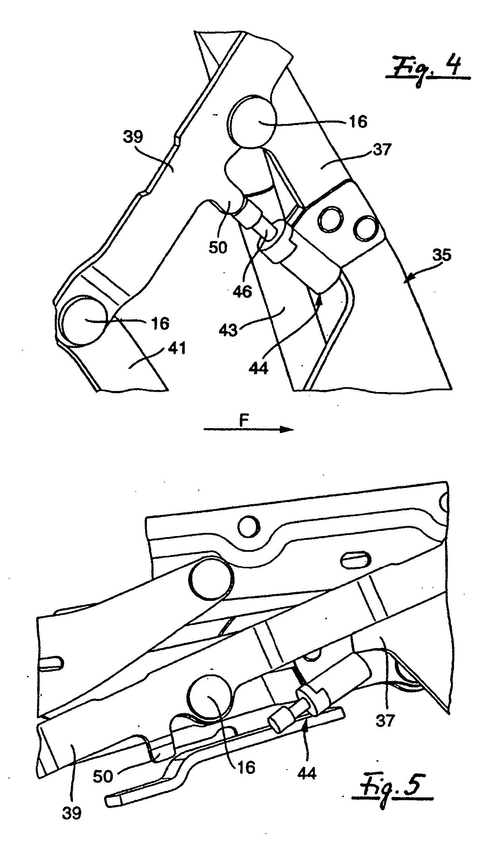

Beim Verschwenken in die Beladestellung gemäß Fig. 2 erstrecken sich die Lenkerparallelogramme 13, 14 der oberen Lenkerkinematik 8 in Richtung der Beaufschlagung über das Federspannglied 43. Diese Streckbewegung in Richtung auf die Beladestellung als Endlage wird über eine Dämpfungseinrichtung 44 abgefangen, die in Fig. 3 schematisiert vergrößert dargestellt ist und deren Lage bezogen auf die Beladestellung in Fig. 4 und bezogen auf die zusammengefahrene Lage der oberen Lenkerkinematik 8 in Fig. 5 zusätzlich veranschaulicht ist. Bezogen auf die der Beladestellung angenäherte oder dieser entsprechende Lage liegt die Dämpfungseinrichtung 44 im Scherenwinkel zwischen den Kreuzungslenkern 35 und 36, benachbart zum gemeinsamen Gelenkpunkt 16 der Lenkerparallelogramme 13, 14 im Bereich des von der Basis 9 ausgehenden Lenkerparallelogrammes 13.

Die Dämpfungseinrichtung 44 ist veranschaulicht durch einen Dämpferzylinder 45, der eine Kolbenstange 46 aufnimmt, die über eine Feder 47 auf ihre ausgefahrene Lage abgestützt ist. Der Dämpferzylinder 45 erstreckt sich bezogen auf die abzusichernde Endstellung im Wesentlichen senkrecht zum Lenkerarm 39 des Kreuzungslenkers 36 und ist gegen den Lenkerarm 37 des Kreuzungslenkers 35 fixiert, und zwar entsprechend dem Scherenwinkel zwischen den Kreuzungslenkern 35 und 36 winklig angestellt zum Lenkerarm 37. Am Lenkerarm 39 ist der Kolbenstange 46 ein Anschlag 50 mit im Wesentlichen verrundeter Anschlagfläche zugeordnet, sodass der Dämpferzylinder 45 im Dämpfungsbereich Winkelbewegungen zwischen den Kreuzungslenkern 35 und 36 folgen kann.

In der zusammengefahrenen Stellung der oberen Lenkerkinematik 8, insbesondere also in der Schließstellung des den Kofferraum 6 überdeckenden Heckdeckels 1, ist für die zusammengefahrene Lenkerkinematik 8 eine End- und Anschlaglage gegeben, in der der Lenker 41 auf einem der Basis 9 zugeordneten Abstützelement 51 aufliegt, wobei dem Abstützelement 51 im Bereich des dem Lenkerarm 39 benachbarten Teiles des Lenkers 41 eine Abstützfläche 52 zugeordnet ist.

## Patentansprüche

1. Fahrzeug mit offenem Aufbau und einer mehrteiligen Dachabdeckung, die über eine karosserieseitig abgestützte Zwangssteuereinrichtung zwischen einer den Fahrzeuginnenraum überdeckenden Schließstellung und einer Öffnungsstellung verstellbar und in dieser Öffnungsstellung in einer heckseitigen Verdeckaufnahme abgelegt ist, die über einen Heckdeckel (1) zu verschließen ist, der aus seiner Abdecklage zur Verdeckaufnahme in eine nach hinten oben aufgeschwenkte, den Zugang zur Verdeckaufnahme freigebende Dachablagestellung und in eine nach vorne oben offene Beladestellung über eine längsseitlich zum Fahrzeug liegende karosserieseitige Anbindung zu verstellen ist, die zwei Lenkerkinematiken (7, 8) umfasst, deren eine, obere Lenkerkinematik (8) gegen den Heckdeckel (1) und deren andere, untere Lenkerkinematik (7) gegen die Karosserie angelenkt ist, die über eine dazwischen liegende Basis (9) aufeinander abgestützt sind **dadurch gekennzeichnet, dass** die beiden Lenkerkinematiken (7, 8) unabhängig voneinander ausfahrbar sind, wobei in der Dachablagestellung die obere, als Siebengelenk ausgebildete Lenkerkinematik (8) und in der Beladestellung die untere Lenkerkinematik (7) ausgefahren ist,
und die beiden Lenkerkinematiken (7, 8) in ihrem kinematischen Aufbau einander entsprechen und, bezogen auf ihre Anordnung in Seitenansicht, als zueinander seitenverkehrt liegende Siebengelenke gestaltet sind, die in allen Stelllagen eine geschlossene, den Heckdeckel (1) und die Karosserie verbindende Lenkerkette bilden.

2. Fahrzeug nach Anspruch 1,
**dadurch gekennzeichnet,**
**dass** die Siebengelenke jeweils durch zwei in der ausgefahrenen Lage gestreckte Viergelenke (Lenkerparallelogramme 11, 12; 13, 14) mit über einen gemeinsamen Gelenkpunkt (15; 16) durchlaufenden Kreuzungslenkern (18, 19; 35, 36) gebildet sind.

3. Fahrzeug nach Anspruch 2,
**dadurch gekennzeichnet,**
**dass** von den Kreuzungslenkern (18, 19) des unteren Siebengelenkes (Lenkerkinematik 7) einer den bezogen auf die Fahrtrichtung (F) rückwärtigen Lenker dessen unteren Viergelenkes (Lenkerparallelogramm 11) bildet und einen Anlenkpunkt zur Karosserie aufweist.

4. Fahrzeug nach Anspruch 2,
**dadurch gekennzeichnet,**
**dass** von den Kreuzungslenkern (35, 36) des oberen Siebengelenkes (Lenkerkinematik 8) einer den bezogen auf die Fahrtrichtung (F) vorderen Lenker dessen unteren Viergelenkes (Lenkerparallelogramm 13) bildet und einen Anlenkpunkt zur Basis (9) aufweist.

5. Fahrzeug nach Anspruch 3,
**dadurch gekennzeichnet,**
**dass**, bezogen auf die ausgefahrene Lage des unteren Siebengelenks (Lenkerkinematik 7), die Anlenkpunkte des an der Karosserie angelenkten Kreuzungslenkers (18) und des daran anschließenden Lenkers (25) des oberen Viergelenkes (Lenkerparallelogramm 12) etwa auf einer Geraden liegen.

6. Fahrzeug nach Anspruch 5,
**dadurch gekennzeichnet,**
**dass** die Gerade zur Lotrechten unter einem spitzen Winkel nach hinten oben verläuft.

7. Fahrzeug nach Anspruch 6,
**dadurch gekennzeichnet,**
**dass** die Größe des spitzen Winkels etwa bei 10 bis 30°, insbesondere bei etwa 20° liegt.

8. Fahrzeug nach Anspruch 4,
**dadurch gekennzeichnet,**
**dass** die Anlenkpunkte des an der Basis (9) angelenkten Kreuzungslenkers (35) des oberen Siebengelenkes (Lenkerkinematik 8) auf einer Geraden liegen, die, bezogen auf die ausgefahrene Lage des oberen Siebengelenkes (Lenkerkinematik 8), unter einem spitzen Winkel zur Lotrechten nach hinten oben verläuft.

9. Fahrzeug nach Anspruch 8,
**dadurch gekennzeichnet,**
**dass** die Größe des spitzen Winkels bei 10 bis 30°, insbesondere bei etwa 20° liegt.

10. Fahrzeug nach Anspruch 8 oder 9,
**dadurch gekennzeichnet,**
**dass** der an den an der Basis (9) angelenkten Kreuzungslenker (35) anschließende Lenker (42) gegensinnig zum Kreuzungslenker (35) geneigt ist.

11. Fahrzeug nach einem der vorhergehenden Ansprüche,
**dadurch gekennzeichnet,**
**dass,** bezogen auf die gestreckte Lage, der basisseitig angelenkte Kreuzungslenker (35) des oberen Siebengelenks (Lenkerkinematik 8) und der karosserieseitig angelenkte Kreuzungslenker (19) des unteren Siebengelenks (Lenkerkinematik 7) etwa gleiche Erstreckungsrichtung aufweisen.

12. Fahrzeug nach einem der vorhergehenden Ansprüche,
**dadurch gekennzeichnet,**
**dass** der unteren Lenkerkinematik (1) ein Stellantrieb (Linearstellglied 26) zugeordnet ist.

13. Fahrzeug nach Anspruch 12,
**dadurch gekennzeichnet,**
**dass** der Stellantrieb durch ein Linearstellglied (26), insbesondere einen Stellzylinder gebildet ist.

14. Fahrzeug nach Anspruch 12,
**dadurch gekennzeichnet,**
**dass** der Stellantrieb an dem karosserieseitig angelenkten Kreuzungslenker (18) der unteren Lenkerkinematik (7) angreift.

15. Fahrzeug nach Anspruch 14,
**dadurch gekennzeichnet,**
**dass** der Stellantrieb bei in die Dachablagestellung aufgeschwenktem Heckdeckel (1) zum Kreuzungslenker (18) der unteren Lenkerkinematik (7) etwa gleich gerichtet verläuft.

16. Fahrzeug nach einem der vorhergehenden Ansprüche,
**dadurch gekennzeichnet,**
**dass** die obere Lenkerkinematik (8) über ein Stellglied (Federspannglied 43), insbesondere ein passives Stellglied in Richtung auf ihre ausgefahrene Lage beaufschlagt ist.

17. Fahrzeug nach Anspruch 16,
**dadurch gekennzeichnet,**
**dass** das passive Stellglied als Federspannglied (43) ausgebildet ist.

18. Fahrzeug nach Anspruch 17,
**dadurch gekennzeichnet,**
**dass** das Federspannglied (43) sich in der ausgefahrenen Lage der oberen Lenkerkinematik (8) etwa gleich gerichtet zu deren basisseitig angelenktem Kreuzungslenker (35) erstreckt.

19. Fahrzeug, insbesondere nach einem oder mehreren der vorhergehenden Ansprüche,
**dadurch gekennzeichnet,**
**dass** zumindest eine der Lenkerkinematiken (8) in der Endphase ihrer Ausfahrbewegung auf ihre gestreckte Lage anschlagbegrenzt und/oder gedämpft ist.

20. Fahrzeug nach Anspruch 19,
**dadurch gekennzeichnet,**
**dass** bezogen auf die anschlagbegrenzte und/oder gedämpfte Lenkerkinematik (8), die Anschlagbegrenzungs- und/oder Dämpfungseinrichtung (44) in einem Scherenwinkel zwischen den Kreuzungslenkern (35, 36) angeordnet ist.

21. Fahrzeug nach Anspruch 19 oder 20,
**dadurch gekennzeichnet,**
**dass** die Anschlagbegrenzungs- und/oder Dämpfungseinrichtung (44) der oberen Lenkerkinematik (8) zugeordnet ist.

22. Fahrzeug nach einem der Ansprüche 19 bis 21,
**dadurch gekennzeichnet,**
**dass** die Anschlagbegrenzungs- und/oder Dämpfungseinrichtung (44) ein in eine Endlage zusammenfahrbares elastisches Stützelement, insbesondere eine Feder (47) aufweist.

23. Fahrzeug nach einem der vorhergehenden Ansprüche,
**dadurch gekennzeichnet,**
**dass** bei in die Dachablagestellung nach hinten oben aufgeschwenktem Heckdeckel (1) die untere Lenkerkinematik (7) lagefest zur Karosserie fixiert ist.

24. Fahrzeug nach Anspruch 23,
**dadurch gekennzeichnet,**
**dass** die Basis (9) gegen die Karosserie verriegelt ist.

25. Fahrzeug, insbesondere nach einem oder mehreren der vorhergehenden Ansprüche,
**dadurch gekennzeichnet,**
**dass** der Heckdeckel (1) an seinem rückwärtigen Ende im Übergang auf die Karosserie einen Heckdeckelverschluss (5) aufweist, über den der Heckdeckel (1) in seiner Schließlage zur Karosserie festgelegt und in seine Dachablagestellung nach hinten oben ausschwenkbar geführt ist.

26. Fahrzeug nach Anspruch 25,
**dadurch gekennzeichnet,**
**dass** der Heckdeckelverschluss (5) einen Schlossteil (30) und einen Führungsteil (Lenkerparallelogramm 33) umfasst, über den das Schlossteil (30) schwenkbar mit der Karosserie verbunden und gegen die Karosserie fixierbar ist.

27. Fahrzeug nach Anspruch 26,
**dadurch gekennzeichnet,**
**dass** der Führungsteil durch ein Lenkerparallelogramm (33) gebildet ist.

28. Fahrzeug nach Anspruch 26 oder 27,
**dadurch gekennzeichnet,**
**dass** der Führungsteil (Lenkerparallelogramm 33) über eine Spanneinrichtung (Spannteil 31) gegen die Karosserie festzulegen ist.

29. Fahrzeug nach Anspruch 28,
**dadurch gekennzeichnet,**
**dass** die Spanneinrichtung (Spannteil 31) einen Schwenkhaken umfasst, über den der Führungsteil (Lenkerparallelogramm 32) in Richtung auf seine der Schließlage des Heckdeckels (1) entsprechende Lage verschwenkbar und zur Karosserie festlegbar ist.

## Claims

1. Vehicle with an open body and a multipart roof covering which may be adjusted via a forced control device supported on the bodywork side, between a closed position covering the vehicle interior and an open position, and is stored, in said open position, in a rear convertible top storage compartment which may be closed by a boot lid (1) which may be adjusted from its covering position for the convertible top storage compartment into a roof storage position pivoted upwardly towards the rear and allowing access to the convertible top storage compartment and into a loading position which is upwardly open towards the front via a connection on the bodywork side located on the longitudinal side of the vehicle, which comprises two linkage mechanisms (7, 8), one upper linkage mechanism (8) thereof being articulated on the boot lid (1) and the other lower linkage mechanism (7) thereof being articulated on the bodywork, which are supported on one another via a base (9) located therebetween, **characterized in that** the two linkage mechanisms (7, 8) may be extended independently of one another, the upper linkage mechanism (8) configured as a seven bar linkage being extended in the roof storage position and the lower linkage mechanism (7) being extended in the loading position, and the two linkage mechanisms (7, 8) corresponding to one another in their kinematic construction and, relative to their arrangement in side view, being designed as seven bar linkages located laterally reversed to one another which form a closed chain of links connecting the boot lid (1) and the bodywork in all positions of adjustment.

2. Vehicle according to Claim 1, **characterized in that** the seven bar linkages are respectively formed by two four bar linkages (parallelogram linkages 11, 12; 13, 14) extended in the extended position by cross links (18, 19; 35, 36) passing through a common link point (15; 16).

3. Vehicle according to Claim 2, **characterized in that** one of the rear links, relative to the direction of travel (F), of the cross links (18, 19) of the lower seven bar linkage (linkage mechanism 7), forms the lower four bar linkage thereof (parallelogram linkage 11) and comprises a point of articulation on the bodywork.

4. Vehicle according to Claim 2, **characterized in that** one of the front links, relative to the direction of travel (F,) of the cross links (35, 36) of the upper seven bar linkage (linkage mechanism 8), forms the lower four bar linkage thereof (parallelogram linkage 13) and comprises a point of articulation on the base (9).

5. Vehicle according to Claim 3, **characterized in that**, relative to the extended position of the lower seven bar linkage (linkage mechanism 7), the points of articulation of the cross link (18) articulated on the bodywork, and the link (25) of the upper four bar linkage (parallelogram linkage 12) adjoining thereto are approximately located in a straight line.

6. Vehicle according to Claim 5, **characterized in that** the straight line extends upwardly towards the rear at an acute angle to the vertical.

7. Vehicle according to Claim 6, **characterized in that** the size of the acute angle is approximately 10 to 30°, in particular approximately 20°.

8. Vehicle according to Claim 4, **characterized in that** the points of articulation of the cross link (35) of the upper seven bar linkage (linkage mechanism 8) articulated on the base (9) are located in a straight line which, relative to the extended position of the upper seven bar linkage (linkage mechanism 8), extends upwardly towards the rear at an acute angle to the vertical.

9. Vehicle according to Claim 8, **characterized in that** the size of the acute angle is 10 to 30°, in particular approximately 20°.

10. Vehicle according to Claim 8 or 9, **characterized in that** the link (42) adjoining the cross link (35) articulated on the base (9) is inclined in an opposite direction to the cross link (35).

11. Vehicle according to one of the preceding claims, **characterized in that**, relative to the extended position, the cross link (35) of the upper seven bar linkage (linkage mechanism 8) articulated on the base side and the cross link (19) of the lower seven bar linkage (linkage mechanism 7) articulated on the bodywork side have approximately the same direction of extension.

12. Vehicle according to one of the preceding claims, **characterized in that** an adjustment drive (linear adjustment member 26) is associated with the lower linkage mechanism (1).

13. Vehicle according to Claim 12, **characterized in that** the adjustment drive is formed by a linear adjustment member (26), in particular an adjusting cylinder.

14. Vehicle according to Claim 12, **characterized in that** the adjustment drive acts on the cross link (18) of the lower linkage mechanism (7) articulated on the bodywork side.

15. Vehicle according to Claim 14, **characterized in that** the adjustment drive extends approximately in the same orientation as the cross link (18) of the lower linkage mechanism (7) when the boot lid (1) is pivoted upwardly into the roof storage position.

16. Vehicle according to one of the preceding claims, **characterized in that** the upper linkage mechanism (8) is impinged upon via an adjustment member (spring tensioning member 43), in particular a passive adjustment member in the direction of its extended position.

17. Vehicle according to Claim 16, **characterized in that** the passive adjustment member is configured as a spring tensioning member (43).

18. Vehicle according to Claim 17, **characterized in that** the spring tensioning member (43) extends in approximately the same orientation in the extended position of the upper linkage mechanism (8) to the cross link (35) thereof articulated on the base side.

19. Vehicle, in particular according to one or more of the preceding claims, **characterized in that** at least one of the linkage mechanisms (8) is limited by a stop and/or dampened in the final phase of its extension movement into its extended position.

20. Vehicle according to Claim 19, **characterized in that** relative to the linkage mechanism (8) which is limited by a stop and/or dampened, the stop limiting device and/or damping device (44) is arranged in a scissors angle between the cross links (35, 36).

21. Vehicle according to Claim 19 or 20, **characterized in that** the stop limiting device and/or damping device (44) is associated with the upper linkage mechanism (8).

22. Vehicle according to one of Claims 19 to 21, **characterized in that** the stop limiting device and/or damping device (44) comprises a resilient support element, in particular a spring (47), which may be retracted into a final position.

23. Vehicle according to one of the preceding claims, **characterized in that** when the boot lid (1) is pivoted upwardly towards the rear into the roof storage position, the lower linkage mechanism (7) is fixed in a positionally secure manner to the bodywork.

24. Vehicle according to Claim 23, **characterized in that** the base (9) is locked against the bodywork.

25. Vehicle, in particular according to one or more of the preceding claims, **characterized in that** the boot lid (1) comprises at its rear end, in the transition area to the bodywork, a boot lid lock (5), via which the boot lid (1) is secured in its locked position to the bodywork and guided to be able to pivot upwardly outwardly towards the rear into its roof storage position.

26. Vehicle according to Claim 25, **characterized in that** the boot lid lock (5) comprises a lock part (30) and a guide part (parallelogram linkage 33) via which the lock part (30) is pivotably connected to the bodywork and may be fixed to the bodywork.

27. Vehicle according to Claim 26, **characterized in that** the guide part is formed by a parallelogram linkage (33).

28. Vehicle according to Claim 26 or 27, **characterized in that** the guide part (parallelogram linkage 33) may be secured via a clamping device (clamping part 31) against the bodywork.

29. Vehicle according to Claim 28, **characterized in that** the clamping device (clamping part 31) comprises a pivoting hook via which the guide part (parallelogram linkage 32) may be pivoted in the direction of its position corresponding to the closed position of the boot lid (1) and may be secured to the bodywork.

## Revendications

1. Véhicule avec une carrosserie ouverte et un revêtement de toit en plusieurs parties, qui peut être déplacé au moyen d'un dispositif de commande forcée soutenu côté carrosserie entre une position de fermeture recouvrant l'habitacle du véhicule et une position d'ouverture et est déposé dans cette position d'ouverture dans un logement de capote côté arrière, qui peut être fermé au moyen d'une couverture arrière (1), laquelle peut être déplacée de sa position de revêtement pour le logement de capote dans une position de dépose de toit basculée vers l'arrière en haut et libérant l'accès au logement de capote et dans une position de chargement ouverte vers l'avant en haut au moyen d'un rattachement côté carrosserie disposé sur le grand côté par rapport au véhicule, lequel rattachement comprend deux cinématiques de bras oscillant (7, 8), dont une cinématique supérieure de bras oscillant (8) est articulée contre la couverture arrière (1), et dont l'autre cinématique inférieure de bras oscillant (7) est articulée contre la carrosserie, lesquelles sont soutenues au moyen d'une base (9) intercalée entre les deux, **caractérisé en ce que** les deux cinématiques de bras oscillant (7, 8) peuvent être déployées indépendamment l'une de l'autre, la cinématique de bras oscillant (8) supérieure, conçue comme articulation à sept éléments, étant déployée dans la position de dépose de toit et la cinématique inférieure de bras oscillant (7) étant déployée dans la position de chargement,
et les deux cinématiques de bras oscillant (7, 8) se correspondent dans leur structure cinématique et, par rapport à leur agencement en vue latérale, sont conçues comme des articulations à sept éléments disposées de façon inversée les unes par rapport aux autres, lesquelles forment dans toutes les positions une chaîne de bras oscillant fermée et, reliant la couverture arrière (1) et la carrosserie.

2. Véhicule selon la revendication 1,
**caractérisé en ce que**
les articulations à sept éléments sont à chaque fois formées par deux articulations à quatre éléments (parallélogrammes de bras oscillant 11, 12 ; 13, 14) étirées dans la position déployée avec des bras oscillants de croisement (18, 19 ; 35, 36) passant par un point d'articulation (15 ; 16) commun.

3. Véhicule selon la revendication 2,
**caractérisé en ce que**,
l'un des bras oscillants de croisement (18, 19) de l'articulation inférieure à sept éléments (cinématique de bras oscillant 7) forme le bras oscillant arrière par rapport au sens de marche (F) de son articulation inférieure à quatre éléments (parallélogramme de bras oscillant 11) et présente un point d'articulation par rapport à la carrosserie.

4. Véhicule selon la revendication 2,
**caractérisé en ce que**,
l'un des bras oscillants de croisement (35, 36) de l'articulation supérieure à sept éléments (cinématique de bras oscillant 8) forme le bras oscillant avant par rapport au sens de marche (F) de son articulation inférieure à quatre éléments (parallélogramme de bras oscillant 13) et présente un point d'articulation par rapport à la base (9).

5. Véhicule selon la revendication 3,
**caractérisé en ce que**,
par rapport à la position déployée de l'articulation inférieure à sept éléments (cinématique de bras oscillant 7), les points d'articulation du bras oscillant de croisement (18) articulé sur la carrosserie et du bras oscillant (25), se raccordant à celui-ci, de l'articulation supérieure à quatre éléments (parallélogramme de bras oscillant 12) sont situés à peu près sur une droite.

6. Véhicule selon la revendication 5,
**caractérisé en ce que**
la droite est agencée vers l'arrière en haut en formant un angle aigu par rapport à la verticale.

7. Véhicule selon la revendication 6,
**caractérisé en ce que**
la grandeur de l'angle aigu se situe à peu près entre 10 et 30°, en particulier aux environs de 20°.

8. Véhicule selon la revendication 4,
**caractérisé en ce que**
les points d'articulation du bras oscillant de croisement (35), articulé sur la base (9), de l'articulation supérieure à sept éléments (cinématique de bras oscillant 8) se situent sur une droite, qui, par rapport à la position déployée de l'articulation supérieure à sept éléments (cinématique de bras oscillant 8), est agencée vers l'arrière en haut en formant un angle aigu par rapport à la verticale.

9. Véhicule selon la revendication 8,
**caractérisé en ce que**
la grandeur de l'angle aigu se situe entre 10 et 30°, en particulier aux environs de 20°.

10. Véhicule selon la revendication 8 ou 9,
**caractérisé en ce que**
le bras oscillant (42) se raccordant au bras oscillant de croisement (35) articulé sur la base (9) est incliné dans le sens contraire au bras oscillant de croisement (35).

11. Véhicule selon l'une quelconque des revendications précédentes,
**caractérisé en ce que**
par rapport à la position étirée, le bras oscillant de croisement (35) articulé côté base de l'articulation supérieure à sept éléments (cinématique de bras oscillant 8) et le bras oscillant de croisement (19) articulé côté carrosserie de l'articulation inférieure à sept éléments (cinématique de bras oscillant 7) présentent un sens d'étirement à peu près identique.

12. Véhicule selon l'une quelconque des revendications précédentes,
**caractérisé en ce que**
un servomoteur (actionneur linéaire 26) est attribué à la cinématique inférieure de bras oscillant (1).

13. Véhicule selon la revendication 12,
**caractérisé en ce que**
le servomoteur est formé par un actionneur linéaire (26), en particulier un cylindre de réglage.

14. Véhicule selon la revendication 12,
**caractérisé en ce que**
le servomoteur s'applique sur le bras oscillant de croisement (18) articulé côté carrosserie de la cinématique inférieure de bras oscillant (7).

15. Véhicule selon la revendication 14,
**caractérisé en ce que**
le servomoteur est dirigé à peu près dans le même sens que le bras oscillant de croisement (18) de la cinématique inférieure de bras oscillant (7) lorsque la couverture arrière (1) est basculée dans la position de dépose de toit.

16. Véhicule selon l'une quelconque des revendications précédentes,
**caractérisé en ce que**
la cinématique supérieure de bras oscillant (8) est sollicitée par un actionneur (élément de serrage à ressort 43), en particulier un actionneur passif en direction de sa position déployée.

17. Véhicule selon la revendication 16,
**caractérisé en ce que**
l'actionneur passif est conçu comme un élément de serrage à ressort (43).

18. Véhicule selon la revendication 17,
**caractérisé en ce que**
l'élément de serrage à ressort (43) s'étend, lorsque la cinématique supérieure de bras oscillant (8) est dans la position déployée, à peu près dans le même sens que son bras oscillant de croisement (35) articulé côté base.

19. Véhicule, en particulier selon l'une quelconque ou plusieurs des revendications précédentes,
**caractérisé en ce que**
au moins l'une des cinématiques de bras oscillant (8) est limitée en butée et/ou est amortie dans la phase finale de son mouvement de déploiement par rapport à sa position étirée.

20. Véhicule selon la revendication 19,
**caractérisé en ce que**,
par rapport à la cinématique de bras oscillant (8) limitée en butée et/ou amortie, le dispositif de limitation de butée et/ou d'amortissement (44) est disposé dans un angle de ciseau entre les bras oscillants de croisement (35, 36).

21. Véhicule selon la revendication 19 ou 20,
**caractérisé en ce que**
le dispositif de limitation de butée et/ou d'amortissement (44) est attribué à la cinématique supérieure de bras oscillant (8).

22. Véhicule selon l'une quelconque des revendications 19 à 21,
**caractérisé en ce que**
le dispositif de limitation de butée et/ou d'amortissement (44) présente un élément de soutien élastique, pouvant être rapproché dans une position finale, en particulier un ressort (47).

23. Véhicule selon l'une quelconque des revendications précédentes,
**caractérisé en ce que**
lorsque la couverture arrière (1) est basculée vers l'arrière en haut dans la position de dépose de toit, la cinématique inférieure de bras oscillant (7) est fixée de façon solidaire en position par rapport à la carrosserie.

24. Véhicule selon la revendication 23,
**caractérisé en ce que**
la base (9) est verrouillée par rapport à la carrosserie.

25. Véhicule, en particulier selon l'une quelconque ou plusieurs des revendications précédentes,
**caractérisé en ce que**
la couverture arrière (1) présente sur son extrémité arrière dans le passage à la carrosserie une fermeture de couverture arrière (5), par laquelle la couverture arrière (1) est fixée dans sa position de fermeture par rapport à la carrosserie et est guidée dans sa position de dépose de toit de façon basculante vers l'arrière en haut.

26. Véhicule selon la revendication 25,
**caractérisé en ce que**
la fermeture de couverture arrière (5) comprend une partie de serrure (30) et une partie de guidage (parallélogramme de bras oscillant 33), par laquelle la partie de serrure (30) est reliée de façon basculante à la carrosserie et peut être fixée par rapport à la carrosserie.

27. Véhicule selon la revendication 26,
**caractérisé en ce que**
la partie de guidage est formée par un parallélogramme de bras oscillant (33).

28. Véhicule selon la revendication 26 ou 27,
**caractérisé en ce que**
la partie de guidage (parallélogramme de bras oscillant 33) peut être fixée au moyen d'un dispositif de serrage (partie de serrage 31) par rapport à la carrosserie.

29. Véhicule selon la revendication 28,
**caractérisé en ce que**
le dispositif de serrage (partie de serrage 31) comprend un crochet de basculement, par lequel la partie de guidage (parallélogramme de bras oscillant 32) peut être basculée en direction de sa position correspondant à la position de fermeture de la couverture arrière (1) et peut être fixée par rapport à la carrosserie.
